# EUROPEAN PATENT APPLICATION

(11) **EP 3 450 229 A1**
(43) Date of publication of application: **06.03.2019**
(21) Application number: 17789693.3
(22) Date of filing: 27.04.2017
(51) Int. Cl.: B60J 1/00, C03C 27/12, B60R 11/02

(54) **BRACKET-EQUIPPED LAMINATED PLATE**

(30) Priority: 27.04.2016 JP 2016089804
(71) Applicant: AGC INC., Chiyoda-ku, Tokyo 1008405 (JP)
(72) Inventor: KIKUCHI Tomoaki, Tokyo 100-8405 (JP); TERASHIMA Fumitaka, Tokyo 100-8405 (JP); NAKAMURA Ryota, Tokyo 100-8405 (JP); MASAKI Yuji, Tokyo 100-8405 (JP); NAKANO Kazuhiro, Tokyo 100-8405 (JP); KAGAYA Osamu, Tokyo 100-8405 (JP); SHIINA Masaru, Tokyo 100-8405 (JP); ENOMOTO Kotaro, Tokyo 100-8405 (JP)
(74) Representative: Müller-Boré & Partner Patentanwälte PartG mbB
(86) International application number: PCT/JP2017/016857
(87) International publication number: WO 2017/188412

(57) **Abstract**

This bracket-equipped laminated plate (1) is a laminated plate (20) which has a bracket (10) attached thereto. The laminated plate (20) is provided with: a first plate (21); a second plate (22); and an intermediate film (23) which is interposed between the first plate (21) and the second plate (22). The bracket (10) is provided with a substrate (11), and an upright wall (12) which is substantially orthogonal to the substrate (11). An information device (102) is fixed on the substrate (11). The tip (11a) of the substrate (11) abuts a first main surface (24) of the second plate (22). An engagement part (14) is provided which bends in a direction towards the inside of the laminated plate (20), from the tip (12a) of the upright wall (12). The engagement part (14) engages with an end (22a) of the second plate (22). As a result of providing the engagement part (14), falling and positional displacement of the bracket (10) from the laminated plate (20) are stopped, and the information device (102) accommodated inside the bracket (10) can be simultaneously prevented from falling and being displaced from a measurement position.

## Description

### Technical Field

The present invention relates to a laminated plate with a bracket to be used as, for example, the windshield of a vehicle.

### Background Art

A technique is known in which an information device such as a camera is mounted in a vehicle and information signals regarding, for example, road conditions are transmitted through a laminated plate (glass) (e.g., the windshield of the vehicle) (see Patent Document 1).

Patent Document 1 discloses a feature wherein a bracket for housing a measuring unit therein is fixed to a glass plate of a vehicle with an adhesive.

### Prior Art Document

### Patent Document

Patent Document 1: International Publication WO 2015/137518

### Summary of the Invention

### Problem that the Invention is to Solve

However, the technique of bracket fixing described in Patent Document 1 has a problem in that the adhesive deteriorates with the lapse of time to make it highly probable that the measuring unit, upon reception of vibrations or the like, becomes detached from the glass plate or changes in position.

The present invention provides a laminated plate with a bracket in which the bracket is less apt to become detached from the laminated plate.

### Means for Solving the Problem

The laminated plate with the bracket of the present invention is one in which the laminated plate includes a first plate and a second plate which is laminated to the first plate via an intermediate film, the second plate has an end which lies within the plane of the first plate in plan view, the bracket includes an engagement part, and the engagement part engages with the end of the second plate.

### Effect of the Invention

The present invention can provide a laminated plate with the bracket in which the bracket is less apt to become detached from the laminated plate.

### Brief Description of the Drawings

[FIG. 1] FIG. 1 is a diagrammatic view showing an application of a laminated plate with a bracket according to the present invention.
[FIG. 2] FIG. 2 is a cross-sectional view showing one example of a first embodiment of the laminated plate with the bracket according to the present invention.
[FIG. 3] FIG. 3 is schematic views for illustrating stress generated in a laminated plate according to the present invention; FIG. 3(a) is a graph regarding compressive stress and tensile stress, and FIG. 3(b) is a view showing a relationship between the laminated plate and the graph.
[FIG. 4] FIG. 4 is a cross-sectional view showing one example of a second embodiment of the laminated plate with the bracket according to the present invention.
[FIG. 5] FIG. 5 is a cross-sectional view showing one example of a third embodiment of the laminated plate with the bracket according to the present invention.

### Modes for Carrying Out the Invention

Embodiments of the laminated plate with the bracket according to the present invention are described below in detail by reference to the drawings.

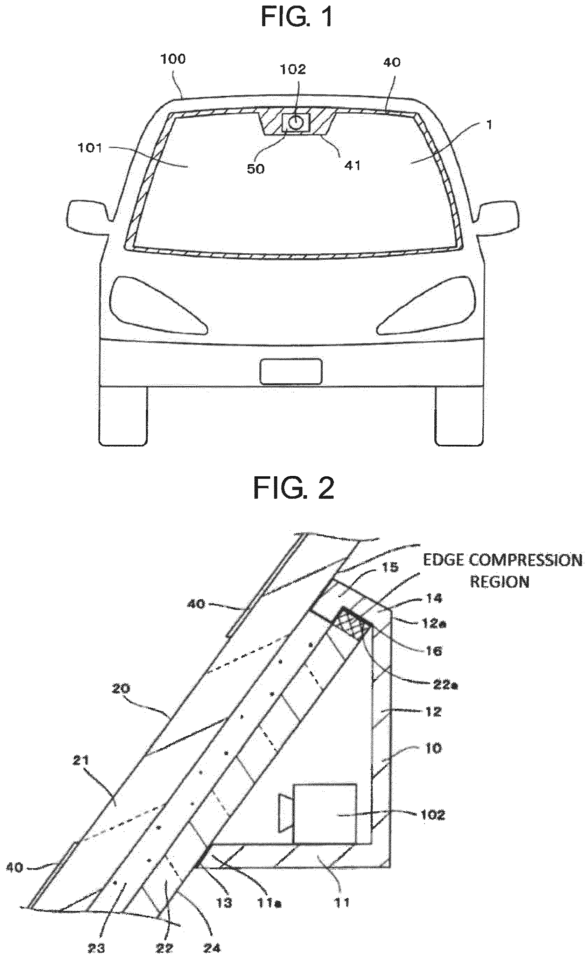

FIG. 1 is a diagrammatic view showing an application of a laminated plate with a bracket according to this embodiment. FIG. 2 is a cross-sectional view showing one example of a first embodiment of the laminated plate with the bracket. An example of the laminated plate with the bracket is described in detail using FIG. 1 and FIG. 2.

In this embodiment, the laminated plate with the bracket 1 is a laminated plate (laminated glass) 20 equipped with a bracket 10. The bracket 10 is provided mainly to the windshield 101 of a vehicle 100, e.g., a motor vehicle, and houses therein an information device 102 to be mounted on the vehicle in order to ensure the safety of the vehicle during driving. The information device 102 is a device for preventing the vehicle from striking or colliding against vehicles, pedestrians, obstacles, etc. present ahead thereof or for letting the driver know a danger, using a camera, radar, or the like. For example, the information device 102 is an information-receiving device and/or an information-sending device, and signals are sent/received through the laminated plate 20 using a millimeter-wave radar, stereo camera, infrared laser, or the like. The term "signals" means any of electromagnetic waves including millimeter wave, visible light, infrared light, etc.

The laminated plate (laminated glass) 20 includes a first plate 21, a second plate 22, and an intermediate film 23 interposed between the first plate 21 and the second plate 22. Namely, the second plate 22 is laminated to the first plate 21 via an intermediate film. The second plate 22 has a first main surface 24 which lies on the opposite side from the intermediate film 23.

The laminated plate 20 is produced by a known float process. In the float process, a molten glass is floated on a molten metal, e.g., tin, to form a plate glass having evenness in thickness and width while strictly controlling the temperature.

An example of the composition of the first plate 21 and the second plate 22 used in the embodiment may include, as represented by mol% based on oxides, a glass containing 50 to 80% of SiO₂, 0 to 10% of B₂O₃, 0.1 to 25% of Al₂O₃, 3 to 30% of Li₂O+Na₂O+K₂O, 0 to 25% of MgO, 0 to 25% of CaO, 0 to 5% of SrO, 0 to 5% of BaO, 0 to 5% of ZrO₂, and 0 to 5% of SnO₂. However, the composition is not limited particularly.

As the composition of the intermediate film 23, a composition which is generally used in a conventional vehicular laminated glass may be used. For example, polyvinylbutyral (PVB), ethylene vinyl acetal (EVA), etc. can be used. Alternatively, a thermosetting resin which is in a liquid state before heating may be used. That is, the intermediate film 23 may be layered in a state of the laminated glass 20, and the intermediate film 23 may be in a liquid state or the like before the first plate 21 and the second plate 22 are bonded.

A visible-light-shielding region 40, which is a black shielding film of, for example, a ceramic, is formed in a peripheral region of the laminated plate 20, and a projecting part 41 is formed in the vicinity of the information device 102 so as to project in an in-plane direction of the laminated plate 20. Furthermore, a region not coated with the black coating film is provided in the visible-light-shielding region 40. This region is a transmission region 50 which signals from or to the information device 102 pass through (see FIG. 1; the rectangular shape).

As shown in FIG. 2, the bracket 10 includes a substrate 11 and an upstanding wall 12 approximately perpendicular to the substrate 11, and the information device 102 is fixed onto the substrate 11. The tip 11a of the substrate 11 is in contact with the first main surface 24 of the second plate 22 and is bonded to the first main surface 24 via a first bonding part 13. An engagement part 14 which is bent from the tip 12a of the upstanding wall 12 toward the inside of the laminated plate 20 is provided. The tip of the engagement part 14 has a projection 15 which is inserted into a part of the intermediate film 23, and the engagement part 14 as a whole has a hook shape.

The laminated plate 20, in a portion thereof on the side where the second plate 22 lies, has a cut-out portion 26 formed by cutting a part (e.g., a tip portion or an intermediate portion) of the second plate 22 and intermediate film 23. An end 22a of the second plate 22 is provided in the cut-out portion 26 so that the end 22a lies within the plane of the first plate 21 in plan view. The inner surface of the engagement part 14 engages with the end 22a of the second plate 22, and the end 22a and the inner surface of the engagement part 14 are bonded to each other via a second bonding part 16. In particular, since the engagement part 14 has a hook shape, the engagement part 14 is in the state of having been hitched at the cut-out portion 26. The bracket 10 hence has improved vibration resistance and improved engagement.

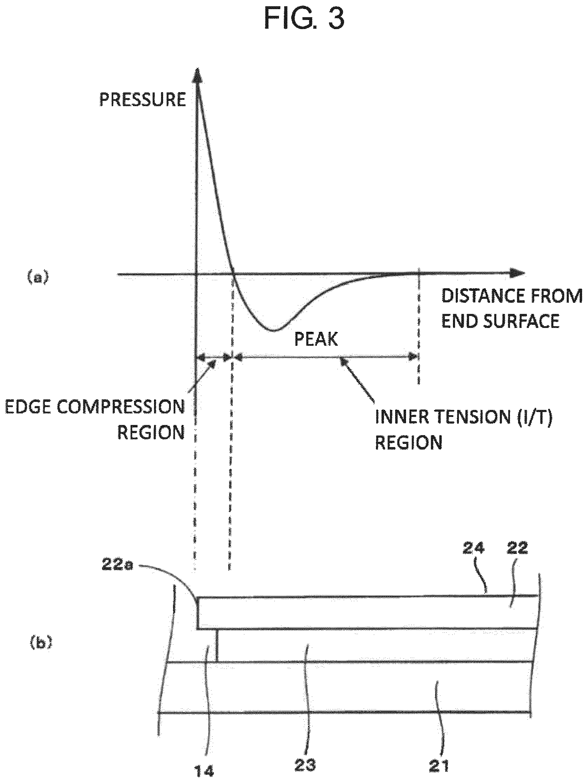

In the case where the laminated plate 20 is a laminated glass, that is, in the case where the first plate 21 is a first glass plate and the second plate 22 is a second glass plate, the engagement part 14 may engage with the second plate (second glass plate) 22 within the range from an end surface of the second plate 22 (the end surface of the end 22a) to an inner portion of an edge compression region thereof (the cross-hatched portion in FIG. 2) in plan view. Since the engagement part 14 engages with a high-strength portion of the second plate 22, glass fracture is less apt to occur and strong engagement can be maintained. The edge compression region will be described in detail with regard to FIG. 3.

The engagement part 14 may lie within the visible-light-shielding region 40 in plan view. The engagement part 14 can be hidden from outside view by the black shielding film, resulting in an improvement in appearance.

In this description, the term "plan view" means a projection view from a thickness direction of the laminated plate.

In a first embodiment, the information device 102 is housed in a space defined by the engagement part 14 of the bracket 10, the tip 11a of the substrate 11, and the laminated plate 20. The disposition of the information device 102 may be achieved by an openable/closable portion provided in a part of the upstanding wall 12 and/or the substrate 11. A part of the upstanding wall 12 and/or substrate 11 may have a hollowed-out portion and the information device 102 may be housed through the hollowed-out portion. A part of the upstanding wall 12 and/or substrate 11 may have a claw (not shown) for fixing the position of the information device, and the housed information device 102 may be supported therewith.

Since the engagement part 14 engages with the end 22a of the second plate 22, the bracket 10 neither becomes detached from the laminated plate 20 nor changes in position and, at the same time, the information device 102 housed in the bracket 10 is prevented from becoming detached therefrom or changing in position from the measuring position. The first bonding part 13, which is different from the engagement part 14, renders the bracket 10 less apt to become detached. Moreover, the second bonding part 16 renders the bracket 10 even less apt to become detached.

FIG. 3 is schematic views for illustrating both impartation of opposing forces to the second plate and a peripheral region. FIG. 3(a) is a graph regarding compressive stress and tensile stress, and FIG. 3(b) shows a relationship between the laminated plate and the graph. The impartation of opposing forces is explained by reference to FIG. 3.

As the graph of FIG. 3(a) shows, edge compression (E/C) (compressive stress) remains in a region ranging from the end 22a of the second plate (second glass plate) 22 (the end surface of the second plate 22) to a given distance therefrom during cooling of the molding die, and inner tension (I/T) (tensile stress) remains in an inner region by the influence of heat from the molding die. It is hence desirable that the engagement part 14 engages with the second plate 22 in the high-strength edge compression region of the second plate 22, that is, in the range from the end 22a of the second plate 22 (end surface of the second plate 22) to an inner portion of the edge composition region, as shown in FIG. 3(b).

It is preferable that the engagement part 14 engages with the second plate 22 on the edge compression region side of the position of the peak of the inner tension of the second plate 22. Since the engagement part 14 does not engage at the inner-tension peak position, where the second plate 22 is lowest in strength, glass fracture is less apt to occur and strong engagement can be maintained.

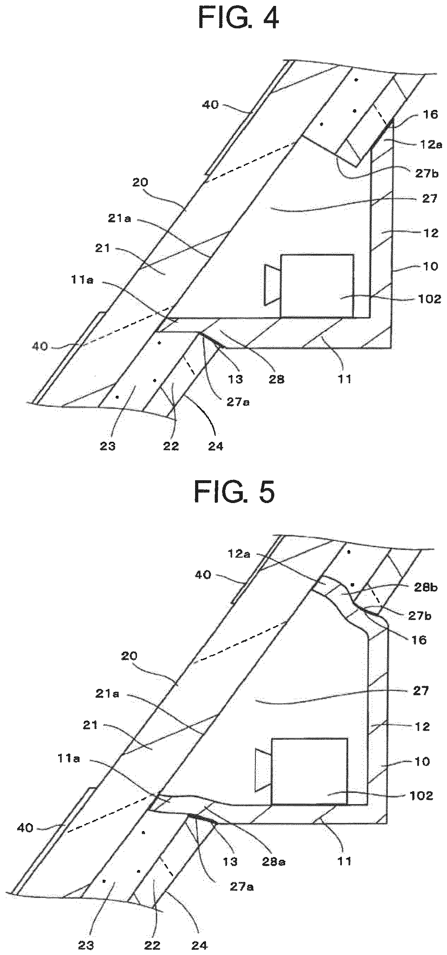

FIG. 4 is a cross-sectional view showing one example of a second embodiment of the laminated plate with the bracket 1. The second embodiment is explained by reference to FIG. 4.

The laminated plate 20 has a hollowed-out portion 27 formed by cutting a part of the second plate 22 of the laminated plate 20. The hollowed-out portion 27 has a lower end 27a which lies on the lower side and is an end 22a of the second plate 22, and an upper end 27b which lies on the upper side. The bracket 10 to be fitted to the hollowed-out portion 27 includes an engagement piece 28, which is disposed in a tip region of the substrate 11 and extends toward the second main surface 21a of the first plate 21, which is on the side where the intermediate film 23 lies. The tip 11a of the engagement piece 28 may be in contact with and bonded to the second main surface 21a of the first plate 21 or may lie near to the second main surface 21a.

The engagement piece 28 engages with the lower end 27a of the hollowed-out portion 27, via a first bonding part 13, and the tip 12a of the upstanding wall 12 is in contact with the first main surface 24 of the second plate 22, via a second bonding part 16. Thus, the bracket 10 engages with the hollowed-out portion 27. The engagement piece 28 of the second embodiment also is the "engagement part" of the first embodiment.

By the engagement of the bracket 10 with the lower end 27a of the hollowed-out portion 27, the lower-side portion of the bracket 10 is supported and the bracket 10 can be stably held.

FIG. 5 is a cross-sectional view showing one example of a third embodiment of the laminated plate with the bracket 1. The third embodiment is explained by reference to FIG. 5.

The third embodiment is based on the second embodiment, and the laminated plate 20 has a hollowed-out portion 27. The bracket 10, which engages with the hollowed-out portion 27, includes a first engagement piece 28a which is an elastic member and is disposed in a tip region of the substrate 11 of the bracket 10. The bracket 10 further includes a second engagement piece 28b which is an elastic member and is formed in a tip region of the upstanding wall 12. The bracket 10 may be wholly constituted of an elastic member. The first engagement piece 28a and the second engagement piece 28b extend respectively from the substrate 11 and the upstanding wall 12 toward the first main surface 24 of the second plate 22.

The first engagement piece 28a engages, in an elastically deformed state, with the lower end 27a of the hollowed-out portion 27 via a first bonding part 13, and the second engagement piece 28b engages, in an elastically deformed state, with the upper end 27b of the hollowed-out portion 27 via a second bonding part 16. The tip 11a of the first engagement piece 28a may be in contact with and bonded to the second main surface 21a of the first plate 21 or may lie near to the second main surface 21a. The tip 12a of the first engagement piece 28b may be in contact with and bonded to the second main surface 21a of the first plate 21 or may lie near to the second main surface 21a.

In the second embodiment and third embodiment also, in cases when the engagement piece 28 (engagement part 14) lies within the visible-light-shielding region 40 in plan view, the engagement part 14 can be hidden from outside view by the black shielding film, resulting in an improvement in appearance.

In the second embodiment, the information device 102 is housed in a space defined by the engagement piece 28 of the bracket 10, the tip 12a of the upstanding wall 12, and the laminated plate 20. In the third embodiment, the information device 102 is housed in a space defined by the first engagement piece 28a and second engagement piece 28b of the bracket 10 and the laminated plate 20.

Since the bracket 10 engages at the lower end 27a and upper end 27b of the hollowed-out portion 27, not only the engagement of the bracket 10 with the laminated plate 20 is rendered strong and stable but also the information device 102 and the bracket 10 can be prevented from becoming detached from the laminated plate 20. In addition, the engagement pieces 28a and 28b receive force during the engaging operation to elastically shrink and then expand and, hence, the force for keeping the bracket 10 engaged with the laminated plate 20 becomes stable.

Windshields 101 for vehicles 100 are described above as an example of uses of this embodiment. However, use can be made of a rear glass. In the case of use as a rear glass, this laminated plate 20 is configured so as to transmit signals from or to an information device 102, e.g., a camera or a radar, for ascertaining the conditions behind the vehicle 100 or for bringing about safe backward movements of the vehicle 100.

The present invention should not be construed as being limited to the embodiments described above, and can be modified or improved as appropriate. The material, shape, dimensions, numerical values, form, number, location, etc. of each of the constituent elements in the embodiments described above are not limited so long as the present invention can be achieved.

This application is based on Japanese Patent Application No. 2016-089804 filed on April 27, 2016, the entire subject matter of which is incorporated herein by reference.

### Industrial Applicability

The laminated plate with the bracket of the present invention is suitable for use as an automotive laminated plate (laminated glass) which is effective in preventing an information device from becoming detached.

### Description of Reference Numerals and Signs

- 1: Laminated plate with the bracket
- 10: Bracket
- 11: Substrate
- 12: Upstanding wall
- 13: First bonding part
- 14: Engagement part
- 15: Projection
- 16: Second bonding part
- 20: Laminated plate (laminated glass)
- 21: First plate (first glass plate)
- 22: Second plate (second glass plate)
- 22a: End
- 23: Intermediate film
- 24: First main surface
- 26: Cut-out portion
- 27: Hollowed-out portion
- 28: Engagement piece
- 28a: First engagement piece (elastic member)
- 28b: Second engagement piece (elastic member)
- 40: Visible-light-shielding region
- 102: Information device

## Claims

1. A laminated plate with a bracket comprising a first plate and a second plate which is laminated to the first plate via an intermediate film,
wherein an end of the second plate lies within a plane of the first plate in plan view,
the bracket has an engagement part, and
the engagement part engages with the end of the second plate.

2. The laminated plate with a bracket according to claim 1,
wherein the bracket has a first bonding part which is different from the engagement part, and
the first bonding part is bonded to a first main surface of the second plate, the first main surface being on the opposite side from the intermediate film.

3. The laminated plate with a bracket according to claim 1 or 2, wherein the engagement part has a second bonding part which is bonded to the end of the second plate.

4. The laminated plate with a bracket according to any one of claims 1 to 3, wherein
the second plate has a hollowed-out portion,
the end includes a lower end which lies on a lower side of the hollowed-out portion and an upper end which lies on an upper side of the hollowed-out portion, and
the bracket engages with the lower end.

5. The laminated plate with a bracket according to claim 4, wherein the bracket engages with the upper end.

6. The laminated plate with a bracket according to any one of claims 1 to 5, wherein
the engagement part is an elastic member.

7. The laminated plate with a bracket according to any one of claims 1 to 6, wherein
the second plate has a cut-out portion, and
the bracket engages with said end of the second plate at the cut-out portion.

8. The laminated plate with a bracket according to any one of claims 1 to 7, wherein
the engagement part has a hook-shaped tip.

9. The laminated plate with a bracket according to any one of claims 1 to 8, wherein
the laminated plate has a visible-light-shielding region and
the engagement part lies within the visible-light-shielding region in plan view.

10. The laminated plate with a bracket according to any one of claims 1 to 9, wherein
the laminated plate is a laminated glass and
in the case where the first plate is a first glass plate and the second plate is a second glass plate, the engagement part engages with the laminated glass within the range from an end surface of the second glass plate to an inner portion of an edge compression region in plan view.
